# EUROPÄISCHE PATENTANMELDUNG

(11) **EP 0 829 709 A1**
(43) Veröffentlichungstag der Anmeldung: **18.03.1998**
(21) Anmeldenummer: 97115971.0
(22) Anmeldetag: 13.09.1997
(51) Int. Cl.: G01K 17/02

(54) **Mobiles System zum Erfassen eines Heizwärmeverbrauchs von Heizkörpern gemäss dem Prinzip der Verdunstung**

(30) Priorität: 16.09.1996 EP 96114783
(71) Anmelder: Raab Karcher Energy Services GmbH, 45131 Essen (DE)
(72) Erfinder: Wolff, Manfred, 68526 Ladenburg (DE)
(74) Vertreter: Schmid, Rudolf, Dipl.-Ing., Patentanwalt

(57) **Zusammenfassung**

Die Erfindung betrifft ein mobiles System zum Erfassen eines Heizwärmeverbrauchs von Heizkörpern gemäß dem Prinzip der Verdunstung mit einem Gerät (5) zur Erfassung verdunsteter Meßflüssigkeit in mindestens einer Ampulle (3). Die Ampulle (3) ist mit der Meßflüssigkeit (2) mittels einem Gehäuse oder einer Halterung (4) an Heizkörpern (1) befestigt. Ein Korrektureinrichtung (10) zur Erfassung der Temperatur ist während des Ablesens vorgesehen und ein an das Gehäuse oder die Halterung (4) der Ampullen (3) adaptierbarer Rahmen des mobilen Geräts (5). Das mobile Gerät (5) ist zum Ausgleich von in der Ampulle (3) verdunsteter Meßflüssigkeit (2) intern oder teilweise extern mit Dosiermitteln (6) versehen.

## Beschreibung

Die Erfindung betrifft ein mobiles System zur Erfassung des Heizwärmeverbrauchs mit dem Merkmalen des Oberbegriffs des Anspruchs 1, ein Gehäuse oder Halterung für Ampullen gemäß Anspruch 21 und ein Verfahren zum Betrieb eines mobilen Systems nach Anspruch 25 oder 27.

Die Abrechnung verbrauchsabhängiger Heizkosten ist in Deutschland durch Verordnung vorgeschrieben und auch in anderen europäischen Ländern üblich. Die Erfassung des Wärmeverbrauchs eines Heizkörpers erfolgt vielfach mit sogenannten Heizkostenverteilern nach dem Verdunstungsprinzip (HKV-V).
Die grundlegenden Anforderungen an diese Geräte sind in der DIN EN 835 beschrieben. Das wesentliche Element eines HKV-V ist eine Ampulle, die mit einer schwerverdunstenden Flüssigkeit gefüllt ist, die in Abhängigkeit von einer Heizkörpertemperatur und damit der Heizleistung mehr oder weniger schnell verdunstet. Die verdunstete Flüssigkeitsmenge ist damit ein Maß für die vom Heizkörper abgegebene Wärmemenge.

Die HKV-V werden üblicherweise einmal jährlich abgelesen, d. h. der Füllstand der Ampulle wird visuell überprüft. Nach dem Ablesen wird die durch die Verdunstung teilweise entleerte Ampulle gegen eine volle ausgetauscht. Hierzu wird der HKV-V geöffnet, wozu üblicherweise ein Manipulationsschutz entfernt werden muß, die alte Ampulle wird entnommen und in einen Vorratsbehälter gestellt, eine volle Ampulle wird in den HKV-V gesetzt, dieser wieder verschlossen und mit einem Manipulationsschutz versehen. Teilweise wird die alte Ampulle zur Nutzerkontrolle verschlossen im HKV-V aufbewahrt und erst bei der nächsten Ablesung ein Jahr später dem HKV-V entnommen.

Ein automatisches Gerät für Heizkostenverteiler nach dem Verdunstungsprinzip ist aus der DE 37 41 944 A1 bekannt. Gemäß der Offenbarung der DE 37 41 944 A1 wird die beim Ablesen am Heizkörper herrschende Temperatur als Meßwert berücksichtigt, da diese einen Einfluß auf die Ausdehnung der Meßflüssigkeit und damit auf den erfaßten Meßwert hat. Zu diesem Zweck wird ein Temperaturfühler eines Ablesegeräts federnd gegen ein Rückteil des Heizkostenverteilers gedrückt.

Die aus dem Stand der Technik bekannten Verfahrensweisen bedeuten einen großen logistischen Aufwand. Für den jährlichen Ampullenwechsel müssen Glasampullen hergestellt, mit Verdunstungsflüssigkeit gefüllt, mit einem Stopfen verschlossen, gelagert und vor Ort transportiert werden. Nach dem Ampullentausch entsteht ein ähnlich großer Aufwand für die Entsorgung. Weitere Nachteile des bisherigen Verfahrens sind der große Zeitaufwand vor Ort und bei visueller Ablesung große Fehleranfälligkeit.

Aufgabe der Erfindung ist es ein mobiles System, ein Gehäuse oder Halterung für Ampullen und ein Verfahren zum Betrieb dieses mobilen Systems zu schaffen, das den logistischen Aufwand zur Erfassung des Heizwärmeverbrauchs wesentlich reduziert, insbesondere soll auf einen Tausch der Ampullen beim Erfassen des Heizwärmeverbrauchs verzichtet werden können.

Diese Aufgabe wird mit einem mobilen System zur Erfassung des Heizwärmeverbrauchs mit den Merkmalen des Anspruchs 1, einem Gehäuse oder Halterung für Ampullen mit den Merkmalen des Anspruchs 21 und einem Verfahren zum Betrieb dieses mobilen Systems mit den Merkmalen der Ansprüche 25 oder 27 gelöst. Bevorzugte Weiterbildungen der Erfindung sind in den Unteransprüchen dargestellt.

Das erfindungsgemäße mobile System zum Erfassen eines Heizwärmeverbrauchs von Heizkörpern gemäß dem Prinzip der Verdunstung weist ein Gerät zur Erfassung verdunsteter Meßflüssigkeit in mindestens einer Ampulle auf, wobei in sogenannten Verdunstungs-Heizkostenverteilern, HKV-V, die Ampulle mit der Meßflüssigkeit mittels einem Gehäuse oder einer Halterung an Heizkörpern befestigt ist. Eine Korrektureinrichtung ist zur Berücksichtigung der Temperatur an der Ampulle während des Ablesens vorgesehen, und ein Rahmen des mobilen Geräts ist an das Gehäuse oder die Halterung der Ampullen adaptierbar. Das mobile Gerät ist zum Ausgleich von in der Ampulle verdunsteter Meßflüssigkeit intern oder zumindest teilweise extern mit Dosiermitteln versehen. Gemäß der Erfindung können mit den in das Gerät integrierten Dosiermitteln die Ampullen der HKV-V befüllt werden, die in Gehäusen oder Halterungen an Heizkörpern befestigt sind, ohne daß es erforderlich wäre, die Ampullen oder Gehäuse oder Halterungen zu bewegen. Der logistische Aufwand für Austausch und Entsorgung der Ampullen und damit die Kosten zur Vorbereitung der Heizkostenverteiler für die Meßwertaufnahme für eine Heizperiode sinkt damit auf ein Minimum. Das mobile Gerät wird in reproduzierbarer Lage an das Gehäuse oder die Halterung einer Ampulle adaptiert und sieht neben Erfassungs- und Auswerteeinheiten Dosiermittel vor, die zum Nachfüllen von verdunsteter Meßflüssigkeit in die Ampulle geeignet sind. Nach Erfassen der verdunsteten Meßflüssigkeit erfolgt das Befüllen der Ampullen mit Meßflüssigkeit mit den erfindungsgemäßen Dosiermitteln.

Gemäß einer vorteilhaften Ausgestaltung der Erfindung weist das mobile System zum Erfassen des Heizwärmeverbrauchs eine auf die Ampulle für die Meßflüssigkeit gerichtete Beleuchtungseinrichtung auf, die mit den Dosiermitteln zusammenwirkt.

Gemäß einer weiteren vorteilhaften Ausgestaltung der Erfindung weist das mobile System zum Erfassen des Heizwärmeverbrauchs im Gerät eine feststehende Ableseoptik mit optischem Sensor auf. Fehlerquellen, die durch bewegliche Ablesevorrichtungen entstehen, können mit der erfindungsgemäßen feststehenden Ableseoptik mit optischem Sensor vermieden werden.

Gemäß einer weiteren vorteilhaften Ausgestaltung der Erfindung weist das mobile System zum Erfassen des Heizwärmeverbrauchs eine Ableseoptik mit insbesondere mindestens einer CCD Zeile (charge-coupled-device Zeile) auf. Das mobile System mit Gerät wird nach dem Entfernen von Manipulationssicherungen, wie z. B. Klebeplomben, auf den Heizkostenverteiler aufgesetzt, wobei z. B. die Klebeplomben abgeschert werden, und zunächst der Flüssigkeitsstand automatisch abgelesen. Hierzu wird die vorgenannte Beleuchtungseinrichtung herangezogen, welche über eine bevorzugterweise unter der Ampulle angeordneten Lichtleitoptik die Meßampulle beleuchtet. Die Brechung des Lichts in der Trennfläche zwischen Meßflüssigkeit und Luft zeigt den Flüssigkeitsstand durch ein deutliches Lichtsignal an. Der Ablesebereich der Meßampulle wird über eine geeignete Optik, insbesondere auf eine im Abfüllgerät vorhandene CCD-Zeile (charge-coupled-device Zeile) projiziert, und das Abbild der Oberfläche der Flüssigkeitssäule in der Ampulle in ein eindeutiges Digitalsignal umgewandelt, das z. B. an der CCD-Zeile ausgegeben wird. Die Ableseoptik kann mit CCD Zeilen als CCD-Matrix Kamera ausgebildet sein zu einer vollständigen Abbildung der Verhältnisse in und um die abzulesende Ampulle.

Gemäß einer weiteren vorteilhaften Ausgestaltung der Erfindung weist das mobile System zum Erfassen des Heizwärmeverbrauchs eine Steuerungs- und Auswerteelektronik auf, die aus dem eindeutigen Digitalsignal, das dem Abbild der Oberfläche der Flüssigkeitssäule in der Ampulle entspricht, die Füllstandshöhe der Ampulle errechnet und die Dosiermittel steuert.

Gemäß einer weiteren vorteilhaften Ausgestaltung der Erfindung weist das mobile System zum Erfassen des Heizwärmeverbrauchs am oder im Gerät eine Kommunikationsschnittstelle auf, über die Verbrauchswerte angegeben werden können aus einem externen oder internen Speicher des Geräts für mehrere Heizperioden betreffende Meßwerte. Auf die Weise kann einem Verbraucher vor Ort vom im allgemeinen für heizungstechnische Fragen kompetenten Bediener des erfindungsgemäßen mobilen Systems angegeben werden, ob sich im Lauf der angegebenen Perioden dessen Verbrauch nennenswert geändert hat und es können vor Ort aus diesen Meßwerten Vorschläge, Beratung oder Verbesserungen abgeleitet werden.

Gemäß einer weiteren vorteilhaften Ausgestaltung der Erfindung zum Erfassen des Heizwärmeverbrauchs weisen die Dosiermittel ein an die Ampulle für die Meßflüssigkeit anschließbares Füllorgan mit zugeordneten Leitungen und Ventilen auf nebst extern angeordnetem Vorratsbehälter für nachzufüllende Meßflüssigkeit sowie einer externen Fördereinrichtung. Vorzugsweise sind Vorratsbehälter und Fördereinrichtung extern angeordnet, so daß das Ablese- und Abfüllgerät nicht so schwer wird.

Gemäß einer weiteren vorteilhaften Ausgestaltung der Erfindung zum Erfassen des Heizwärmeverbrauchs ist das Füllorgan als bewegliche Füllkanüle mit Endstücken aus Metall ausgebildet, so daß das erfindungsgemäße mobile System flexibel einsetzbar ist. Im Gehäuse des HKV, das bevorzugterweise aus Kunststoff beschaffen ist, ist oberhalb der Ampullenmündung eine Öffnung vorgesehen, durch die die Füllkanüle in die Ampulle abgesenkt wird. Die Zuführung der Kanüle kann z.B. mit Hilfe einer geeigneten Mechanik bewerkstelligt werden, die durch einen kleinen Elektromotor angetrieben wird.

Gemäß einer weiteren vorteilhaften Ausgestaltung der Erfindung zum Erfassen des Heizwärmeverbrauchs wird das Füllorgan der Dosiermittel über eine motorisch angetriebene Absenkmechanik der Ampulle für die Meßflüssigkeit zugeführt.

Gemäß einer weiteren vorteilhaften Ausgestaltung der Erfindung zum Erfassen des Heizwärmeverbrauchs erfolgt der Antrieb der Absenkmechanik elektromagnetisch, pneumatisch oder durch Federkraft.
Gemäß einer weiteren vorteilhaften Ausgestaltung der Erfindung zum Erfassen des Heizwärmeverbrauchs wird die Meßflüssigkeit mittels einer Fördereinrichtung, wie z. B. einer motorisch betriebenen Kolben- oder Kreiselpumpe über eine Schlauchleitung und ein Steuer- und Rückschlagventil der Ampulle zugeführt.

Gemäß einer weiteren vorteilhaften Ausgestaltung der Erfindung zum Erfassen des Heizwärmeverbrauchs wird die Meßflüssigkeit durch Überdruck im Meßflüssigkeits-Vorratsbehälter gefördert, der z. B. durch ein Treibgas oder mit Hilfe einer Luftpumpe erzeugt werden kann.

Gemäß einer weiteren vorteilhaften Ausgestaltung der Erfindung zum Erfassen des Heizwärmeverbrauchs weisen die Dosiermittel eine Grobdosierungseinheit auf, welche über eine Zeitsteuerung oder eine Weglängenregelung die Meßflüssigkeit vordosieren.

Gemäß einer weiteren vorteilhaften Ausgestaltung der Erfindung zum Erfassen des Heizwärmeverbrauchs ist im Gerät eine Einstellvorrichtung für eine Vorjahresanzeige angeordnet, so daß die Bereitstellung eines Nachweises für den angegebenen Meßwert der letzten Abrechnungsperiode erbracht werden kann.

Gemäß einer weiteren vorteilhaften Ausgestaltung der Erfindung zum Erfassen des Heizwärmeverbrauchs ist die Korrektureinrichtung zur Berücksichtigung der Temperatur als Temperatursensor ausgebildet, der elektromagnetisch an Gehäuse oder Halterung der Ampulle zur Anlage gebracht wird.

Gemäß einer weiteren vorteilhaften Ausgestaltung der Erfindung zum Erfassen des Heizwärmeverbrauchs wird der Sensor pneumatisch oder durch Federkraft zur Anlage gebracht.

Vorzugsweise kann der Temperatursensor gemäß der Erfindung die Temperatur an der Ampulle auch berührungslos erfassen, z. B. mittels Strahlungsmessung oder der Erfassung von Parametern der Meßflüssigkeit, wie Dichte, Wichte oder Brechungsindizes.

Die Auswerteelektronik kann die Ausdehnung der Flüssigkeit bei Betriebstemperatur der Heizung gegenüber einer Bezugstemperatur rechnerisch kompensieren und aus der auf Bezugstemperatur korrigierten Füllhöhe einen der benutzten Skala entsprechenden temperaturkompensierten Anzeigewert und daraus die notwendige Nachfüllmenge berechnen. Da die Temperatur der nachzufüllenden Flüssigkeit im Vorratsbehälter eventuell ebenfalls von der für die Kalibrierung der Anzeigenskala zugrunde gelegten üblichen Bezugstemperatur von beispielsweise 20° C abweicht (z.B. bei Ablesung im Hochsommer oder durch Erwärmung im Gerät), kann zweckmäßigerweise auch die Temperatur im Vorratsbehälter durch einen zweiten Sensor bestimmt und die thermische Ausdehnung der Nachfüllmenge in gleicher Weise wie oben beschrieben berücksichtigt werden.

Gemäß einer weiteren vorteilhaften Ausgestaltung der Erfindung zum Erfassen des Heizwärmeverbrauchs wird die Sollfüllstandshöhe in der Ampulle mittels der Ableseeinrichtung geregelt. Die Nachfüllmenge wird mit Hilfe einer Fördereinrichtung, z.B. der kleinen Kolbenpumpe über die Schlauchleitung und das Steuer- oder Rückschlagventil in die Meßampulle gedrückt. Die Pumpe, vorzugsweise eine hochgenaue Dosierpumpe wird z.B. mit einem kleinen Elektromotor betrieben, wobei die genaue Menge über Zeitsteuerung oder Weglängenregelung grob voreingestellt werden kann. Die exakte Füllstandshöhe wird anschließend mit Hilfe der Ableseeinrichtung geregelt. Die Regelung der Fördereinrichtung kann alternativ auch von Anfang an mittels der Auswerteeinheit erfolgen. Nach diesem Vorgang ist die Meßampulle wieder vollständig gefüllt, einschließlich eines Zuschlages zur Kompensation der Kaltverdunstung und gegebenenfalls thermischen Ausdehnung wie zuvor beschrieben.

Gemäß einer weiteren vorteilhaften Ausgestaltung der Erfindung zum Erfassen des Heizwärmeverbrauchs weist das Gerät zur Vermeidung von Doppelpassungen einen gegenüber dem Gehäuse- oder dem Halter für die Ampulle positionierbaren Freiraum zwischen einem Verbindungselement des Geräts und dem Gehäuse oder dem Halter auf. Anlageflächen an Schenkeln des Geräts sind konkav geformt, um beim Aufschieben auf das Gehäuse oder Halter Klemmen und Verkanten zu vermeiden. Eine der Anlageflächen kann aber auch alternativ von einem Druckmittel gegen Gehäuse oder Träger gedrückt werden oder einer der Schenkel kann mit einem Scharnier gelenkig am Verbindungselement des Geräts angeordnet sein, und durch Verschwenken fest an Gehäuse oder Träger angelegt werden.

Gemäß einer weiteren vorteilhaften Ausgestaltung der Erfindung zum Erfassen des Heizwärmeverbrauchs weist die Korrektureinrichtung des mobilen Systems einen Wärmetauscher auf zur Berücksichtigung der Temperatur an der Ampulle während des Erfassens. Mittels des Wärmetauschers kann in das Füllorgan abgesaugte Meßflüssigkeit z. B. auf Raumtemperatur gebracht werden, so daß Meßfehler aus Temperaturabweichungen entfallen und eine rechnerische Korrektur dieser Meßfehler nicht erforderlich ist.

Gemäß einer weiteren vorteilhaften Ausgestaltung der Erfindung zum Erfassen des Heizwärmeverbrauchs weist die Korrektureinrichtung am Füllorgan einen Temperatursensor auf zur Berücksichtigung der Temperatur an der Ampulle während des Erfassens. Der Temperatursensor kann so am Füllorgan angeordnet sein, daß er mit dem Füllorgan in die Ampulle abgesenkt wird oder der Temperatursensor befindet sich im Füllorgan an einer Stelle außerhalb der Ampulle.

Gemäß einer weiteren vorteilhaften Ausgestaltung der Erfindung zum Erfassen des Heizwärmeverbrauchs ist mindestens ein Paar Elektroden, die als Sensoren für den Füllstand in der Ampulle ausgebildet sind, am Füllorgan vorgesehen, mit denen die Sollfüllstandshöhe der Meßflüssigkeit in der Ampulle bestimmt werden kann. Zur Verbesserung der Meßgenauigkeit können am Füllorgan in unterschiedlichen Höhen jeweils zwei Füllstand-Sensoren angeordnet sein. Die Füllstand-Sensoren können aus jeweils einem Elektrodenpaar gebildet werden, mit dem Änderungen der elektrischen Leitfähigkeit oder der Dielektrizität detektiert werden können. Der erste Füllstand-Sensor bestimmt die Sollfüllstandshöhe z. B. bei einem genau vorgegebenen Weg, mit dem das Füllorgan in die Ampulle eingeführt wird. Der zweite Füllstand-Sensor dient zur Kalibrierung der Ampulle, indem bei genau bekanntem Abstand zwischen erstem und zweitem Füllstand-Sensor, die von der Pumpe geförderte Menge an Meßflüssigkeit bestimmt wird, die erforderlich ist, um den Pegel der Meßflüssigkeit in der Ampulle vom ersten zum zweiten Füllstand-Sensor zu ändern.

Aus dieser von der Pumpe geförderten Menge an Meßflüssigkeit kann der genaue Durchmesser der Ampulle, der in der Praxis innerhalb gewisser Toleranzen variiert, bestimmt werden. Die Meßgenauigkeit kann aber auch nur mit einem Füllstand-Sensor am Füllorgan verbessert werden, wobei der Füllstand-Sensor mit einem bestimmten Abstand vom freien Ende des Füllorgans angeordnet ist. Bei einem genau vorgegebenen Weg, mit dem das Füllorgan in die Ampulle eingeführt wird, bestimmt das freie Ende des Füllorgans die Sollfüllstandshöhe, nämlich die Höhe in der Ampulle, bis zu der maximal abgesaugt werden kann. Nachdem die Ampulle bis zur Sollfüllstandshöhe mit Meßflüssigkeit gefüllt ist, wird gemäß der Erfindung zusätzlich von der Pumpe Meßflüssigkeit in die Ampulle eingefüllt, bis der eine Füllstand-Sensor am Füllorgan etwas oberhalb der Sollfüllstandshöhe erreicht ist, und die Pumpe sofort abgeschaltet wird. Aus der Laufzeit der Pumpe kann die geförderte Menge an Meßflüssigkeit integriert werden, die erforderlich ist, um den Pegel der Meßflüssigkeit in der Ampulle vom ersten Füllstand-Sensor zur Sollfüllstandshöhe zu ändern. Aus dieser von der Pumpe geförderten Menge an Meßflüssigkeit kann wiederum der genaue Durchmesser der Ampulle bestimmt werden. Anschließend kann die zusätzlich von der Pumpe in die Ampulle eingefüllte Meßflüssigkeit wieder abgesaugt werden, wobei die Sollfüllstandshöhe genau erreicht wird, indem die Pumpe so lange fördert bis von dem freien Ende des Füllorgans, das immer noch auf die Sollfüllstandshöhe eingestellt ist, keine Meßflüssigkeit mehr angesaugt wird.

Gemäß einer weiteren vorteilhaften Ausgestaltung der Erfindung zum Erfassen des Heizwärmeverbrauchs ist im Gerät ein optischer Sensor, insbesondere eine Lichtschranke, oder ein kapazitiver Sensor vorgesehen, der auf das Füllorgan wirkt zur Bestimmung der Mengen von Meßflüssigkeit.

Gemäß der Erfindung zum Erfassen des Heizwärmeverbrauchs weist ein Gehäuse oder eine Halterung Ampullen auf mit verdunstender Meßflüssigkeit zum Erfassen des Heizwärmeverbrauchs, wobei die Ampullen gemäß einer weiteren vorteilhaften Ausgestaltung der Erfindung zur Aufnahme und/oder zum Positionieren des Füllorgans der Dosiermittel geeignete Öffnungen aufweisen, und wobei die entsprechenden Öffnungen in Gehäuse oder Halterung durch Manipulationssicherungen, vorzugsweise durch Klebeplomben, verschlossen sind.

Gemäß einer weiteren vorteilhaften Ausgestaltung der Erfindung zum Erfassen des Heizwärmeverbrauchs weist ein Gehäuse oder Halterung für Ampullen eine definierte Ausrichtung bewirkende Adaptionsmittel an einem Gehäuse- oder Halterungsabschnitt, insbesondere zwei Noppen an einem oberen oder unteren Gehäuse- oder Halterungsabschnitt auf.

Gemäß einer weiteren vorteilhaften Ausgestaltung der Erfindung zum Erfassen des Heizwärmeverbrauchs sind an Gehäuse oder Halterung Ablesewerte vorgesehen, die zur Gerätekennzeichnung ein Identifikationssignal, z. B. eine Kennzeichnung des betreffenden Heizkostenverteilers beinhalten. Die Ablesewerte sind so an Halterung oder Gehäuse angeordnet, daß deren Abbild im Gerät zu einer Kontrolle der Positionierung des Geräts verwendet werden kann. Bei Feststellen eines Abweichens der normgerechten Positionierung des Geräts relativ zu Halterung oder Gehäuse kann in Abhängigkeit von dieser Abweichung von der Auswerteeinheit ein Korrekturwert bereitgestellt werden, der auf die Ablesewerte für den Verbrauch des Heizkörpers angewandt werden kann, wobei gemäß einer weiteren vorteilhaften Ausgestaltung der Erfindung zum Erfassen des Heizwärmeverbrauchs bei einer festgestellten Abweichung des Gerätes von der normgerechten Positionierung ein akustisches oder optisches Signal für den Bediener des Gerätes ausgegeben werden kann, so daß dieser ggf. die Position des Gerätes korrigieren kann. Gut erkennbare Merkmale am Gehäuse, wie z. B. ein Logo, der Barcode, ..., die einen eindeutigen Abstand zur Nullmarke der Ampulle aufweisen, können zur Ermittlung der relativen Füllstandhöhe herangezogen werden. Die Gerätekennzeichnung des HKV kann in maschinenlesbarer Form, z.B. als Strichcode, vorliegen. Das Einlesen des Strichcodes in das Gerät kann mit der mindestens einen oder einer zweiten CCD-Zeile erfolgen. Der Strichcode wird hierzu beispielsweise durch eine zweite im Gerät vorhandenen Glühlampe beleuchtet. Die eingelesene Gerätekennzeichnung und der Anzeigenwert für die Füllstandshöhe werden gemeinsam im Gerät gespeichert oder über die Schnittstelle an einen Erfassungsrechner übertragen.

Das erfindungsgemäße Gehäuse oder Halterung für Meßampullen nach dem Verdunstungsprinzip kann mit Mitteln versehen sein, die die Kontrolle des Vorjahresverbrauchs erlauben. Dies kann erfolgen durch Aufbewahren einer Kontrollampulle im HKV neben der aktuellen Meßampulle im Gehäuse, oder durch einen verschiebbaren Zeiger, der beim Ablesen auf die aktuelle Anzeige eingestellt wird. Bei Verwendung einer zweiten Ampulle (Kontrollampulle) erfolgt dann kein Ampullentausch, sondern die Kontrollampulle wird in ähnlicher Weise, wie zuvor für die Meßampulle beschrieben, auf den gemessenen Füllstand der Meßampulle aufgefüllt. Hierzu wird zweckmäßig zunächst die Kontrollampulle auf 100% Füllhöhe gefüllt. Anschließend wird soviel Flüssigkeit aus der Kontrollampulle abgesaugt, bis der vorherige Füllstand der aktuellen Meßampulle erreicht ist. Bei identischen Ampullenmaßen sind die in die Meßampulle nachgefüllte und die aus der Kontrollampulle abgesaugte Flüssigkeitsmenge identisch. Das Nachfüllen und Absaugen erfolgt zweckmäßigerweise parallel, z.B. durch mechanische Kopplung eines Saugkolbens mit dem Kolben der Dosierpumpe. Durch diese mechanische Kopplung ist inhärent sichergestellt, daß die Füllhöhe der Kontrollampulle derjenigen der Meßampulle vor der Nachfüllung genau entspricht. Da bei diesem Verfahren entgegen der herkömmlichen Verfahrensweise kein Ampullentausch erfolgt, hat die Flüssigkeit in der Kontrollampulle eine reine Anzeigefunktion und muß deshalb auch keine verdunstende Meßflüssigkeit sein. Zweckmäßigerweise wird hier ein Indikatorstoff, wie z. B. eine Flüssigkeit eingesetzt, die bei den zu erwartenden Temperaturen praktisch nicht verdunstet, so daß auf einen dampfdichten Verschluß der Kontrollampulle verzichtet werden kann.

Bei einer Vorjahresanzeige mit Hilfe eines beweglichen Zeigers muß eine entsprechende Mechanik vorgesehen werden, mit dem dieser Zeiger auf die Anzeige der Meßampulle gestellt werden kann. Die Einstellung des Zeigers kann durch ein geeignetes Gestänge erfolgen, das parallel zur Kanüle durch eine zweite Bohrung in das HKV-Gehäuse eingeführt und im Zeiger eingehakt wird. Zweckmäßigerweise wird der Zeiger zunächst auf die Nullmarke, entsprechend vollständiger Ampullenfüllung, gestellt. Anschließend erfolgt die Einstellung des Zeigers auf den Füllstand der Meßampulle. Die notwendige Zeigerverschiebung ist der nachzufüllenden Flüssigkeitsmenge proportional. Deshalb kann hier analog dem oben beschriebenen Verfahren durch mechanische Kopplung des Kolbenantriebs für die Dosierpumpe mit dem Gestängeantrieb für die Zeigerverschiebung, gegebenenfalls durch Zwischenschaltung eines geeigneten Getriebes, inhärent sichergestellt werden, daß die Zeigerposition dem vorherigen Füllstand der Meßampulle entspricht.

Nach Beendigung der oben beschriebenen Vorgänge wird die Füllkanüle und gegebenenfalls das Gestänge für die Zeigerverstellung wieder nach oben in Ruheposition gefahren, so daß das erfindungungsgemäße mobile System von Gehäuse oder Halterung abgenommen werden kann. Anschließend wird die Fördereinrichtung wieder in ihre Ausgangsstellung zurückgefahren und vollständig mit Meßflüssigkeit gefüllt, die über eine zweite Schlauchleitung und ein zweites Rückschlagventil bzw. Steuerventil aus dem Vorratsbehälter angesaugt wird. Die Öffnungen auf der Oberseite des HKV werden abschließend mit einem Manipulationsschutz, z. B. einer Klebeplombe, abgedeckt, wobei vorzugsweise das mobile System vor Abziehen von dem Heizkostenverteiler den Manipulationsschutz wieder herstellt.

Gemäß einer weiteren vorteilhaften Ausgestaltung der Erfindung zum Erfassen des Heizwärmeverbrauchs sind an Gehäuse oder Halterung der Ampullen gut erkennbare Merkmale, wie z. B. ein Logo, der Barcode, ..., die einen eindeutigen Abstand zur Nullmarke der Ampulle (3) aufweisen, vorgesehen und können bei der Auswertung der z. B. durch eine CCD-Matrix Kamera gewonnenenen Meßdaten als Bezugspunkte bei der Ermittlung der relativen Füllstandshöhe herangezogen werden.

Gemäß einer weiteren vorteilhaften Ausgestaltung der Erfindung zum Erfassen des Heizwärmeverbrauchs wird bei einem Verfahren zum Betrieb des mobilen Systems in einem ersten Schritt die Meßflüssigkeit von der Pumpe aus der Ampulle vollständig in ein Füllorgan der Dosiermittel abgesaugt. Die Säule der Meßflüssigkeit im Füllorgan wird kontrolliert, so daß Beginn und Ende des Entleervorgangs und gegebenenfalls auch in der Meßflüssigkeit eingeschlossene Luftblasen festgestellt werden können. Wird Luft gefördert, wird die Pumpe sofort abgeschaltet. Die Laufzeit der Pumpe wird integriert und daraus die Menge der abgesaugten Meßflüssigkeit bestimmt. Aus der Menge der abgesaugten Meßflüssigkeit wird abschließend durch Umrechnung mit den Maßen der Ampulle die Füllstandshöhe in der Ampulle bestimmt.

Gemäß einer weiteren vorteilhaften Ausgestaltung der Erfindung zum Erfassen des Heizwärmeverbrauchs wird bei einem Verfahren zum Betrieb des mobilen Systems die Temperatur der Meßflüssigkeit im Füllorgan durch Wärmeaustausch mit dem Gerät auf die durch Messung bekannte und nahezu konstante Temperatur des Geräts gebracht. Meßfehler, die sich z. B. aus Temperaturabweichungen der Meßflüssigkeit ergeben, sind auf diese Weise eliminiert.

Gemäß einer weiteren vorteilhaften Ausgestaltung der Erfindung zum Erfassen des Heizwärmeverbrauchs bei einem Verfahren zum Betrieb des mobilen Systems wird Meßflüssigkeit von Pumpe in die Ampulle gefüllt, wobei die Säule der Meßflüssigkeit in der Ampulle von optischen Sensoren oder durch eine auf Leitfähigkeitsmessung beruhende Sensorik, die in die Ampulle mit dem Füllorgan abgesenkt wird, kontrolliert wird, so daß das Erreichen des Sollfüllstands der Meßflüssigkeit in der Ampulle festgestellt werden kann. Die Laufzeit der Pumpe wird integriert und daraus die Menge der abgesaugten Meßflüssigkeit bestimmt.

Gemäß einer weiteren vorteilhaften Ausgestaltung der Erfindung zum Erfassen des Heizwärmeverbrauchs wird bei einem Verfahren zum Betrieb eines mobilen Systems zum Vermessen oder zur Eichung der Ampullen die bis zum Sollfüllstand in der Ampulle aufgefüllte Meßflüssigkeit von der Pumpe aus der Ampulle vollständig abgesaugt und daraus die Menge der Meßflüssigkeit bei voller Ampulle bestimmt.

Anhand der beigefügten Zeichnung, die ein bevorzugtes Ausführungsbeispiel der Erfindung zeigt, wird diese nun näher beschrieben.

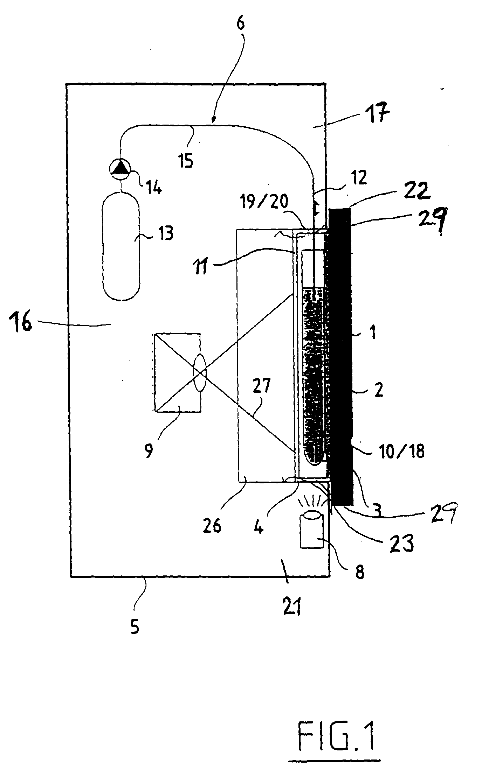

Figur 1 zeigt eine schematische Ansicht des erfindungsgemäßen Systems.

Fig. 1: An einem Heizkörper 1 ist ein Gehäuse oder eine Halterung 4 vorgesehen, die durch einen entsprechenden, hier nicht näher dargestellten Manipulationsschutz an dem Heizkörper 1 befestigt ist. Das Gehäuse oder die Halterung 4 beinhaltet eine Meßampulle 3, in der eine verdunstende Meßflüssigkeit 2 enthalten ist. Ein dem Heizkörper 1 zugewandter Rückenteil 18 von Gehäuse oder Halterung 4 ist aus wärmeleitendem Metall und eine von dem Heizkörper 1 abgewandte Vorderseite 11 ist aus Kunststoff gefertigt und gibt den Blick frei auf eine Meß- und eine eventuell vorhandene Kontrollampulle 3.

Die Ampulle 3 ist so gestaltet, daß eine Wiederbefüllung der während einer Abrechnungsperiode verdunsteten Meßflüssigkeit möglich ist. In einer bevorzugten Ausführung ist die Ampulle 3 nach oben offen.

Ein mobiles System weist ein Gerät 5 auf, das auf das Gehäuse bzw. die Halterung 4 für die Ampullen 3 aufsetzbar ist. Das Gerät 5 weist im wesentlichen ein Verbindungselement 16 in Form eines Handgriffs und einen oberen Schenkel 17 und einen unteren Schenkel 21 auf. Die oberen und unteren Schenkel 17, 21 weisen jeweils vorzugsweise konkave Anlageflächen 22, 23 auf, die sich an oberen und unteren Deckein 29 von Gehäuse oder Halterung 4 abstützen und beim Aufschieben und Abziehen auf die oberen und unteren Deckel 29 von Gehäuse oder Halterung 4 aufgrund ihrer konkaven Form nicht zum Klemmen neigen.

Alternativ kann einer der Schenkel 17, 21 über ein Scharnier (nicht dargestellt) gelenkig mit dem Verbindungselement 16 verbunden sein, so daß das Anpassen von vorzugsweise ebenen Anlageflächen 22, 23 eines der oberen oder unteren Schenkel des Geräts 5 an Gehäuse oder Halterung 4 durch Schließen des Winkels zwischen Verbindungselement und Schenkel erfolgen kann. Gemäß einer alternativen Ausgestaltung der Erfindung kann aber auch eine vorzugsweise ebene Anlagefläche 22, 23 einer der oberen oder unteren Schenkel z. B. durch Druckmittel verstellt werden, so daß eine kraftschlüssige Anlage der Anlageflächen 22, 23 an den Deckein 29 von Gehäuse oder Halterung 4 erfolgt, wobei die der verstellbaren Anlagefläche gegenüberliegende Anlagefläche vorzugsweise starr wäre, um als Bezugsfläche für eine definierte Positionierung des Geräts 5 dienen zu können.

Weiter sind Adaptionsmittel 21 an Gehäuse oder Halterung 4 vorgesehen, die eine definierte Positionierung von mobilem System 5 zu Gehäuse bzw. Halterung 4 sicherstellen. Paarweise Noppen (nicht dargestellt) an den oberen und unteren Deckeln 29 von Gehäuse oder Halterung 4 oder Öffnungen 32 am oberen Deckel 29 von Gehäuse oder Halterung 4 für Dosiermittel 6 sind so ausgebildet, daß diese mit den Anlageflächen der gegenüberliegenden Schenkel zusammenwirken, um eine korrekte Ausrichtung des Geräts 5 auf Gehäuse oder Halterung 4 zu erzielen.

Das Gerät 5 des mobilen Systems weist eine Ableseoptik 9 mit mindestens einer CCD-Zeile zur Ermittlung des Pegelstands der Meßflüssigkeit in der Ampulle 3 auf. CCD-Zeilen der Ableseoptik 9 können auch zu einer CCD-Matrix Kamera ausgebildet sein. Das Gerät 5 weist zudem Erfassung- und Auswerteeinheiten 7 (nicht dargestellt) sowie Dosiermittel 6 zum Ausgleich der verdunsteten Meßflüssigkeit 2 auf. Die Erfassungs- und Auswerteeinheiten 7 weisen insbesondere eine Beleuchtungseinrichtung 8 und einen Temperatursensor 10 auf. Die Dosiermittel 6 des Gerätes 5 bestehen aus einem vorzugsweise extern im Schenkel 17 angeordneten Füllorgan 12 nebst einem vorzugsweise extern angeordneten Vorratsbehälter 13 für die nachzufüllende Meßflüssigkeit 2 sowie einer Pumpe 14 mit zugeordneten Leitungen 15 und Ventilen 16, wobei ein Ventil 16 zwischen Vorratsbehälter 13 und Pumpe 14 und ein Ventil zwischen Pumpe 14 und Füllorgan 12 angeordnet ist. Vorzugsweise ist das Füllorgan 12 als eine bewegliche Füllkanüle ausgebildet, das mit einer Absenkmechanik verbunden ist. Das Dosiermittel (6) kann eine Grobdosierungseinheit aufweisen, welche über eine Zeitsteuerung oder eine Weglängenregelung die Meßflüssigkeit (2) vordosiert.

Das Füllorgan 12 kann durch Öffnungen 19 im oberen Deckel in das Gehäuse 4 bzw. in die Ampulle 3 eingeführt werden. Die Öffnungen 19 in dem oberen Abschnitt von Gehäuse oder Halterung 4 sind durch einen Manipulationsschutz, z. B. eine Klebeplombe 20, verschlossen.

Ein Temperatursensor 10 des Geräts 5 wird von einem Elektromagnet 22 gegen Gehäuse oder Halterung 4 für die Ampullen 3 der Meßflüssigkeit 2 gedrückt. Alternativ kann die Erfassung der Temperatur an Gehäuse oder Halterung 4 durch den Temperatursensor 10 berührungslos erfolgen, indem z. B. im Gerät 5 eine Auswertung der Wärmestrahlung des Heizkörpers 1 erfolgt oder die Dichte oder Wichte der Meßflüssigkeit in der Ampulle 3 erfaßt wird, oder indem z. B. der von der Dichte der Meßflüssigkeit abhängige Brechungsindex entsprechend in der Auswerteeinheit ausgewertet wird.

Nachdem das Gerät 5 mit dem Gehäuse bzw. dem Halter 4 für die Ampulle 3 adaptiert ist, erfolgt der Meß- und danach mittels der Dosiermittel der Nachfüllprozeß. Der vor der Ampulle 3 befindlichen Freiraum 26 des Gerätes 5 verhindert eine doppelte Anlage am Gehäuse oder Träger 4 und somit Überbestimmungen der geometrischen Beziehungen zwischen Gehäuse oder Halterung 4 und Gerät 5.

Gut erkennbare Merkmale am Gehäuse bzw. Halter 4, wie ein Logo oder ein Barcode für eine Identifikationsnummer zur Kennung des HKV, sind mit eindeutigem Abstand zur Nullmarke der Ampulle 3 angeordnet und unterstützen die Ermittlung des relativen Füllstands.

Gemäß einer alternativen Ausgestaltung des mobilen Systems wird die verdunstete Meßflüssigkeit gemessen, indem die Füllstandshöhe der Meßflüssigkeit in der Ampulle 3 dadurch bestimmt wird, daß die Ampulle 3 von Gerät 5 zunächst vollständig leergesaugt wird. Pumpe 14 mit zugeordneten Leitungen 15 und Ventilen 16 kann hierzu zunächst rückwärts betrieben werden, wobei Pumpe 14 nur solange betrieben wird, solange entlang einer bestimmbaren Meßstrecke ausschließlich Meßflüssigkeit aus der Ampulle 3 gefördert wird. Wird Luft anstelle Meßflüssigkeit von der Pumpe 14 durch die Meßstrecke in den zugeordneten Leitungen 15 und Ventile 16 gefördert, kann dies z. B. durch eine Lichtschranke oder einen kapazitiven Sensor, die die Flüssigkeitssäule entlang der Meßstrecke in Leitung 15 überwachen, detektiert und die Pumpe 14 sofort abgeschaltet werden. Beginn und Ende des Entleervorgangs der Meßflüssigkeit aus der Ampulle 3 und gegebenenfalls auch eingeschlossene Luftblasen können festgestellt werden, so daß aus der Laufzeit der Pumpe 14 die aus der Ampulle 3 geförderte Meßflüssigkeit genau aufintegriert werden kann. Aus der Bestimmung der geförderten Meßflüssigkeit kann durch Umrechnung mit den bekannten Ampullenmaßen die Füllstandshöhe und daraus die Menge verdunsteter Meßflüssigkeit bestimmt werden.

Die geförderte Meßflüssigkeit kann zur Kompensation von Fehlern aus Temperatur-Ausdehnung einem Wärmetauscher zugeführt werden, bevor die Meßflüssigkeit in die Meßstrecke eintritt. Der Wärmetauscher sorgt dafür, daß die Temperatur der Meßflüssigkeit der an sich bekannten Temperatur der Meßstrecke in Gerät 5 angeglichen wird, so daß eine Messung der Temperatur des HKV entfallen kann. Innerhalb der Leitung 15 des Füllorgans 12 kann aber auch ein Temperatursensor angeordnet sein, der die Temperatur der abgesaugten Meßflüssigkeit bestimmt. Der Temperatursensor kann so am Füllorgan angeordnet sein, daß er mit dem Füllorgan in die Ampulle abgesenkt wird oder der Temperatursensor befindet sich im Füllorgan an einer Stelle außerhalb der Ampulle.

Ein weiteres Verfahren zur Bestimmung der Menge verdunsteter Meßflüssigkeit sieht vor, das in die Ampulle 3 nachzufüllende Volumen bis zum Erreichen des Sollfüllstandes, der sogenannten Nullmarke, zu bestimmen. Das Erreichen dieses Sollfüllstandes durch die Meßflüssigkeit in der Ampulle 3 kann von außen optisch oder durch eine geeignete Sensorik erfaßt werden, indem z. B. zwei getrennte Elektroden mit der beweglichen Füllkanüle in eine bestimmte Position in der Ampulle 3 gebracht werden. Schließt die nachgefüllte Meßflüssigkeit die elektrische Verbindung zwischen den Elektroden ist der Sollfüllstand erreicht und die Pumpe 14 wird sofort abgeschaltet.

Zum Ausgleich unterschiedlicher Abmessungen der Ampullen 3 kann vorgesehen sein, daß nach Erreichen des Sollfüllstands die gesamte Meßflüssigkeit noch einmal aus der Ampulle 3 abgesaugt und diese Menge ebenfalls gemessen wird. Dieses Verfahren ist insbesondere vorteilhaft, wenn die Meßflüssigkeit schnell gefördert werden kann, z. B. mit einer besonders leistungsfähigen Pumpe 14 mit Grobdosierung. Bei einem ersten Bestimmen der verdunsteten Meßflüssigkeit kann das Absaugen der gesamten Meßflüssigkeit aus der Ampulle 3 zum Eichen der Ampulle 3 herangezogen werden und die ermittelten Werte können bei einem entsprechend mit Speicherkapazität ausgestatteten Gerät 5 mit der Kennung des Geräts 5 korreliert und für den nächsten Meßvorgang abgespeichert werden, so daß beim nächsten Vorgang auf die Eichwerte für die jeweilige Ampulle 3 zurückgegriffen werden kann und so der unter Umständen etwas zeitaufwendige Verfahrensschritt des Absaugens der gesamten Meßflüssigkeit aus der Ampulle 3 nur beim ersten Meßvorgang erfolgen muß und bei allen nachfolgenden entfallen kann.

Für Ampullen 3, die wenig Platz bieten für das Einführen eines Füllorgans zum vollständigen Absaugen von Meßflüssigkeit, kann gemäß einer weiteren vorteilhaften Ausgestaltung der Erfindung zum Erfassen des Heizwärmeverbrauchs mindestens ein Paar, jeweils als Füllstand-Sensoren ausgebildeter Elektroden am Füllorgan vorgesehen sein, mit denen die Sollfüllstandshöhe der Meßflüssigkeit in der Ampulle und die Abmessungen der Ampulle bestimmt werden können, ohne daß das Füllorgan 12 bis zum tiefsten Punkt der Ampulle 3 abgesenkt werden müßte.

Zur Verbesserung der Meßgenauigkeit können am Füllorgan 12 in unterschiedlichen Höhen jeweils zwei Füllstand-Sensoren angeordnet sein. Der erste Füllstand-Sensor bestimmt die Sollfüllstandshöhe z. B. bei einem genau vorgegebenen Weg, mit dem das Füllorgan 12 in die Ampulle 3 eingeführt wird. Der zweite Füllstand-Sensor dient iVm dem ersten Füllstand-Sensor zur Kalibrierung der Ampulle 3, indem bei genau bekanntem Abstand zwischen erstem und zweitem Füllstand-Sensor, die von der Pumpe 14 geförderte Menge an Meßflüssigkeit bestimmt wird, die erforderlich ist, um den Pegel der Meßflüssigkeit in der Ampulle 3 vom ersten zum zweiten Füllstand-Sensor zu ändern. Aus dieser von der Pumpe 14 geförderten Menge an Meßflüssigkeit können die Abmessungen der Ampulle 3 bestimmt werden.

Die Meßgenauigkeit kann aber auch nur mit einem Füllstand-Sensor am Füllorgan 12 verbessert werden, indem dieser Füllstand-Sensor mit einem bestimmten Abstand vom freien Ende des Füllorgans 12 angeordnet ist. Bei einem genau vorgegebenen Weg, mit dem das Füllorgan 12 in die Ampulle 3 eingeführt wird, bestimmt das freie Ende des Füllorgans 12 die Sollfüllstandshöhe, nämlich die Höhe in der Ampulle 3, bis zu der maximal abgesaugt werden kann. Nachdem die Ampulle 3 bis zur Sollfüllstandshöhe mit Meßflüssigkeit gefüllt ist, wird zusätzlich von der Pumpe 14 Meßflüssigkeit in die Ampulle 3 eingefüllt, bis der eine Füllstand-Sensor am Füllorgan 12 etwas oberhalb der Sollfüllstandshöhe erreicht ist, und die Pumpe 14 sofort abgeschaltet wird. Aus der Laufzeit der Pumpe 14 kann die geförderte Menge an Meßflüssigkeit integriert werden, die erforderlich ist, um den Pegel der Meßflüssigkeit in der Ampulle 3 vom ersten Füllstand-Sensor zur Sollfüllstandshöhe zu ändern. Aus dieser von der Pumpe 14 geförderten Menge an Meßflüssigkeit können wiederum die Abmessungen der Ampulle 3 bestimmt werden. Anschließend kann die zusätzlich von der Pumpe 14 in die Ampulle 3 eingefüllte Meßflüssigkeit wieder abgesaugt werden, wobei die Sollfüllstandshöhe genau erreicht wird, indem die Pumpe 14 so lange fördert bis von dem freien Ende des Füllorgans 12, das immer noch auf die Sollfüllstandshöhe eingestellt ist, keine Meßflüssigkeit mehr angesaugt wird.

### Bezugszeichenliste

- 1: Heizquelle
- 2: Meßflüssigkeit
- 3: Ampulle für 2
- 4: Gehäuse/Halterung für 3
- 5: Gerät (Ablesen und Abfüllen)
- 6: Dosiermittel
- 7: Erfassungs- und Auswerteeinheiten
- 8: Beleuchtungseinrichtung
- 9: Ableseoptik
- 10: Temperatursensor
- 11: Kommunikationsschnittstelle
- 12: Füllorgan
- 13: Vorratsbehälter
- 14: Pumpe
- 15: Leitung
- 16: Ventil
- 17: Einstellvorrichtung für Vorjahresanzeige
- 18: Wärmeleitendes Rückenteil
- 19: Öffnung für Dosierung
- 20: Klebeplombe
- 21: Adaptionsmittel
- 22: Elektromagnet
- 23: Separate Beleuchtungseinheit
- 26: Freiraum in 5
- 27: Lichtkegel

## Patentansprüche

1. Mobiles System zum Erfassen eines Heizwärmeverbrauchs von Heizkörpern gemäß dem Prinzip der Verdunstung mit einem Gerät (5) zur Erfassung verdunsteter Meßflüssigkeit in mindestens einer Ampulle (3),
wobei die Ampulle (3) mit der Meßflüssigkeit (2) mittels einem Gehäuse oder einer Halterung (4) an Heizkörpern (1) befestigt ist,
einer Korrektureinrichtung (10) zur Berücksichtigung der Temperatur an der Ampulle während des Erfassens, und einem an das Gehäuse oder die Halterung (4) der Ampullen (3) adaptierbaren Rahmen des mobilen Geräts (5),
**dadurch gekennzeichnet, daß**
das mobile Gerät (5) zum Ausgleich von in der Ampulle (3) verdunsteter Meßflüssigkeit (2) intern oder teilweise extern mit Dosiermitteln (6) versehen ist.

2. Mobiles System zum Erfassen des Heizwärmeverbrauchs nach Anspruch 1, dadurch gekennzeichnet, daß eine auf die Ampulle (3) für die Meßflüssigkeit (2) gerichtete Beleuchtungseinrichtung (8) vorgesehen ist, die mit den Dosiermitteln (6) zusammenwirkt.

3. Mobiles System zum Erfassen des Heizwärmeverbrauchs nach Anspruch 1 und 2, dadurch gekennzeichnet, daß im Gerät (5) eine feststehende Ableseoptik mit optischem Sensor angeordnet ist.

4. Mobiles System zum Erfassen des Heizwärmeverbrauchs nach Anspruch 3, dadurch gekennzeichnet, daß die Ableseoptik mindestens eine CCD Zeile (couple charge device-Zeile), die vorzugsweise als CCD-Matrix Kamera ausgebildet sein kann, aufweist.

5. Mobiles System zum Erfassen des Heizwärmeverbrauchs nach Anspruch 1, dadurch gekennzeichnet, daß eine Steuerungs- und Auswerteelektronik (7) des Geräts (5) vorgesehen ist.

6. Mobiles System zum Erfassen des Heizwärmeverbrauchs nach Anspruch 1, dadurch gekennzeichnet, daß am/im Gerät (5) eine Kommunikationsschnittstelle (11) angeordnet ist.

7. Mobiles System (5) zum Erfassen des Heizwärmeverbrauchs nach Anspruch 1, dadurch gekennzeichnet, daß die Dosiermittel (6) ein an die Ampulle (3) für die Meßflüssigkeit (2) anschließbares Füllorgan (12) mit zugeordneten Leitungen (15) und Ventilen (16) aufweisen nebst extern angeordnetem Vorratsbehälter (13) für nachzufüllende Meßflüssigkeit (2) sowie einer externen Pumpe (14).

8. Mobiles System zum Erfassen des Heizwärmeverbrauchs nach Anspruch 7, dadurch gekennzeichnet, daß das Füllorgan (12) als bewegliche Füllkanüle ausgebildet ist.

9. Mobiles System zum Erfassen des Heizwärmeverbrauchs nach Anspruch 1, dadurch gekennzeichnet, daß das Füllorgan (12) der Dosiermittel (6) über eine motorisch angetriebene Absenkmechanik der Ampulle (3) für die Meßflüssigkeit (2) zugeführt wird.

10. Mobiles System zum Erfassen des Heizwärmeverbrauchs nach Anspruch 1, dadurch gekennzeichnet, daß Meßflüssigkeit (2) mittels einer Fördereinrichtung, wie z. B. einer motorisch betriebenen Kolben- oder Kreiselpumpe (14) über eine Schlauchleitung (15) und ein Steuer- und Rückschlagventil (16) der Ampulle (3) zugeführt wird.

11. Mobiles System zum Erfassen des Heizwärmeverbrauchs nach Anspruch 1, dadurch gekennzeichnet, daß die Dosiermittel (6) eine Grobdosierungseinheit aufweisen, welche über eine Zeitsteuerung oder eine Weglängenregelung die Meßflüssigkeit (2) vordosieren.

12. Mobiles System zum Erfassen des Heizwärmeverbrauchs nach Anspruch 1, dadurch gekennzeichnet, daß im Gerät (5) eine Einstellvorrichtung (17) für eine Vorjahresanzeige angeordnet ist.

13. Mobiles System zum Erfassen des Heizwärmeverbrauchs nach Anspruch 1, dadurch gekennzeichnet, daß als Korrektureinrichtung (10) zur Berücksichtigung der Temperatur ein Temperatursensor vorgesehen ist, der elektromagnetisch an Gehäuse oder Halterung (4) der Ampulle (3) zur Anlage gebracht wird.

14. Mobiles System zum Erfassen des Heizwärmeverbrauchs nach Anspruch 13, dadurch gekennzeichnet, daß der Temperatursensor (10) die Temperatur an der Ampulle (3) berührungslos erfaßt, z. B. mittels Strahlungsmessung oder der Erfassung von Parametern der Meßflüssigkeit, wie Dichte, Wichte oder Brechungsindizes über z. B. die von der Beleuchtungseinrichtung (8) reflektierte Strahlung.

15. Mobiles System zum Erfassen des Heizwärmeverbrauchs nach Anspruch 1, dadurch gekennzeichnet, daß die Sollfüllstandshöhe in der Ampulle (3) mittels der Ableseeinrichtung geregelt wird.

16. Mobiles System zum Erfassen des Heizwärmeverbrauchs nach Anspruch 1, dadurch gekennzeichnet, daß das Gerät (5) einen gegenüber dem Gehäuse- oder dem Halter (4) für die Ampulle (3) positionierbaren Freiraum (26) aufweist.

17. Mobiles System zum Erfassen des Heizwärmeverbrauchs nach Anspruch 1, dadurch gekennzeichnet, daß die Meßflüssigkeit infolge Durchleiten durch einen Wärmetauscher auf Raumtemperatur gebracht wird und eine rechnerische Korrektur nicht erforderlich ist.

18. Mobiles System zum Erfassen des Heizwärmeverbrauchs nach Anspruch 1, dadurch gekennzeichnet, daß die Korrektureinrichtung (10) zur Berücksichtigung der Temperatur an der Ampulle während des Erfassens am Füllorgan (12) einen Temperatursensor aufweist.

19. Mobiles System zum Erfassen des Heizwärmeverbrauchs nach Anspruch 1, dadurch gekennzeichnet, daß am Füllorgan (12) mindestens ein Füllstand-Sensor, insbesondere ein Paar Elektroden, vorgesehen ist, wobei bei mehreren Füllstand-Sensoren, diese Füllstand-Sensoren in unterschiedlichen Höhen am Füllorgan (12) angeordnet sind.

20. Mobiles System zum Erfassen des Heizwärmeverbrauchs nach Anspruch 1, dadurch gekennzeichnet, daß im Gerät (5) ein optischer Sensor, insbesondere eine Lichtschranke, oder ein kapazitiver Sensor vorgesehen ist, der auf das Füllorgan (12) wirkt zur Bestimmung der Mengen von Meßflüssigkeit.

21. Gehäuse oder Halterung (4) für Ampullen (3) mit verdunstender Meßflüssigkeit (2) zum Erfassen des Heizwärmeverbrauchs,
**dadurch gekennzeichnet, daß**
die Ampullen (3) der Meßflüssigkeit (2) zur Aufnahme und/oder zum Positionieren des Füllorgans (12) der Dosiermittel (6) geeignete Öffnungen (19) aufweisen, und entsprechende Öffnungen in Gehäuse oder Halterung (4) durch Klebeplomben (20) verschlossen sind.

22. Gehäuse oder Halterung (4) für Ampullen (3) gemäß Anspruch 21, dadurch gekennzeichnet, daß eine definierte Ausrichtung des Geräts (5) bewirkende Adaptionsmittel (21) an einem Gehäuse- oder Halterungsabschnitt, insbesondere zwei Noppen an einem oberen oder unteren Deckel von Gehäuse- oder Halterung, vorgesehen sind.

23. Gehäuse oder Halterung (4) für Ampullen (3) gemäß Anspruch 21, dadurch gekennzeichnet, daß Ablesewerte vorgesehen sind, die zur Gerätekennzeichnung ein Identifikationssignal beinhalten.

24. Gehäuse oder Halterung (4) für Ampullen (3) gemäß Anspruch 21, dadurch gekennzeichnet, daß gut erkennbare Merkmale am Gehäuse, wie z. B. ein Logo, der Barcode, ..., die einen eindeutigen Abstand zur Nullmarke der Ampulle (3) aufweisen, vorgesehen sind und zur Ermittlung der relativen Füllstandshöhe herangezogen werden.

25. Verfahren zum Betrieb eines mobilen Systems nach Anspruch 1, dadurch gekennzeichnet, daß
die Meßflüssigkeit von Pumpe (14) aus der Ampulle (3) vollständig in ein Füllorgan (12) der Dosiermittel (6) abgesaugt wird,
die Säule der Meßflüssigkeit im Füllorgan (12) kontrolliert wird, so daß Beginn und Ende des Entleervorgangs und gegebenenfalls auch in der Meßflüssigkeit eingeschlossene Luftblasen festgestellt werden können,
die Laufzeit der Pumpe (14) integriert und daraus die Menge der abgesaugten Meßflüssigkeit bestimmt wird, und aus der Menge der abgesaugten Meßflüssigkeit durch Umrechnung mit den Maßen der Ampulle (3) die Füllstandshöhe in der Ampulle (3) bestimmt wird.

26. Verfahren zum Betrieb eines mobilen Systems nach Anspruch 25, dadurch gekennzeichnet, daß die Temperatur der Meßflüssigkeit im Füllorgan (12) durch Wärmeaustausch mit dem Gerät (5) auf die durch Messung bekannte und nahezu konstante Temperatur des Geräts (5) gebracht wird.

27. Verfahren zum Betrieb eines mobilen Systems nach Anspruch 1, dadurch gekennzeichnet, daß
Meßflüssigkeit von Pumpe (14) in die Ampulle (3) gefüllt wird,
die Säule der Meßflüssigkeit in der Ampulle (3) von optischen Sensoren oder durch eine auf Leitfähigkeitsmessung beruhende Sensorik, die in die Ampulle (3) mit dem Füllorga (12) abgesenkt wird, kontrolliert wird, so daß das Erreichen des Sollfüllstands der Meßflüssigkeit in der Ampulle (3) festgestellt werden kann,
die Laufzeit der Pumpe (14) integriert und
daraus die Menge der abgesaugten Meßflüssigkeit bestimmt wird.

28. Verfahren zum Betrieb eines mobilen Systems nach Anspruch 25 oder 27, dadurch gekennzeichnet, daß zum Vermessen oder zur Eichung der Ampullen (3) die bis zum Sollfüllstand in der Ampulle (3) aufgefüllte Meßflüssigkeit von Pumpe (14) aus der Ampulle (3) vollständig abgesaugt wird und
daraus die Menge der Meßflüssigkeit bei voller Ampulle (3) bestimmt wird.
